Europäisches Patentamt

European Patent Office

Office européen des brevets

(19)

(11) Publication number: **0 078 399**
**B1**

(12) **EUROPEAN PATENT SPECIFICATION**

(45) Date of publication of patent specification: **04.06.86**

(51) Int. Cl.⁴: **G 02 B 6/44**

(21) Application number: **82108782.2**

(22) Date of filing: **22.09.82**

(54) **Optical connector.**

(30) Priority: **03.10.81 JP 157998/81**

(43) Date of publication of application:
**11.05.83 Bulletin 83/19**

(45) Publication of the grant of the patent:
**04.06.86 Bulletin 86/23**

(84) Designated Contracting States:
**DE FR GB IT**

(56) References cited:
**DE-B-2 541 247**
**US-A-3 995 935**
**US-A-4 108 534**
**US-A-4 240 695**

(73) Proprietor: **TOYOTA JIDOSHA KABUSHIKI KAISHA**
**1, Toyota-cho Toyota-shi**
**Aichi-ken 471 (JP)**

(73) Proprietor: **SUMITOMO ELECTRIC INDUSTRIES LIMITED**
**No. 15, Kitahama 5-chome Higashi-ku**
**Osaka-shi Osaka 541 (JP)**

(72) Inventor: **Moriyama, Masakazu**
**10, Toyota-cho**
**Toyota-shi Aichi (JP)**
Inventor: **Shinohara, Toshio**
**49-11, 5-chome, Kosaka-cho**
**Toyota-shi Aichi (JP)**
Inventor: **Hayashi, Kyozo**
**c/o Osaka Works of Sumitomo Electr. Industr. Ltd.**
**1-3, Shimaya 1-chome Konohana-ku, Osaka (JP)**
Inventor: **Sugimoto, Tetsuo**
**c/o Osaka Works of Sumitomo Electr. Industr. Ltd.**
**1-3, Shimaya 1-chome Konohana-ku, Osaka (JP)**

(74) Representative: **Glawe, Delfs, Moll & Partner**
**Patentanwälte**
**Postfach 26 01 62 Liebherrstrasse 20**
**D-8000 München 26 (DE)**

# Description

The present invention relates to an optical fiber connector for connecting two optical fibers arranged side by side with an optical element or an optical fiber, comprising a plug attached to the end of each of the fibers and a bushing disposed to surround both fibers egressing from the rear ends of the plugs, the end portion of the bushing facing away from said plugs being formed with a convexly curved surface facing the fibers for protecting them against breaking.

In the optical communication, signals are transmitted from a light emitting element through optical fibers to a light receiving element. An optical connector is used for connection of optical fibers with photoelectric elements or optical fibers. In many cases, an elongated metallic plug is mounted on the tip of each optical fiber and the plug is held in a male optical connector. On the other hand, the photoelectric elements are held in a female optical connector having a hollow portion. When the male and female connectors are coupled to each other, there will result a connection between the optical fibers and the photoelectric elements.

Because of the necessity of connecting two lines, transmitting and receiving ones, the female optical connector is often adapted to contain light emitting and receiving elements disposed side by side. In that case, the male optical connector, too, contains two optical fibers disposed side by side, each fiber having a plug attached to its end. Of course, sometimes only a single line has to be connected.

In such connectors, optical fibers are enclosed in a flexible material such as synthetic resin and rubber, the optical fibers extending from the rear end of the metal plugs. But, they are sometimes forced to bend excessively under tension applied thereto. The flexible material is easily deformed so that it is not capable to prevent the optical fibers from bending excessively. Optical fibers are made from quartz, glass, plastics, etc. They might be broken if the optical fiber were forcibly bent with too small a radius of curvature.

For a single optical fiber an optical fiber connector with a bushing of the above mentioned kind is known from US—A—42 40 695. This known connector cannot, however, take into consideration the different liability of two optical fibers arranged side by side to be bent in the plane common to the two fiber axis and in the direction perpendicular to that plane.

It is therefore the object of the present invention to provide an optical fiber connector of the above mentioned kind which can prevent excessive bending of the optical fiber in any direction.

This object according to the invention is solved by the features, that said convex surface of said bushing extends over an arc of substantially 180° in a longitudinal section at right angles to the common plane of said cables, and extends over an arc of substantially 90° in a longitudinal section coincident with the common plane of the cables.

Other objects and advantages of the present invention will become apparent from the following description taking reference to the accompanying drawings, in which;

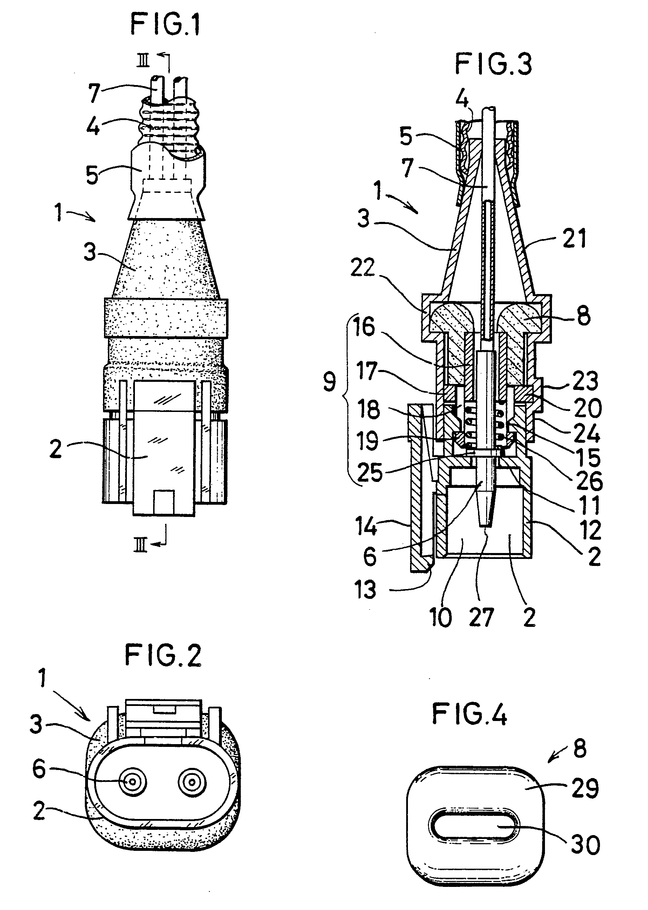

Fig. 1 is a plan view of an optical connector embodying the present invention;

Fig. 2 is a front view of the same;

Fig. 3 is a cross-sectional view taken along line III—III of Fig. 1;

Fig. 4 is a rear view of the bushing;

Fig. 5 is a plan view of the same broken in part;

Fig. 6 is a front view of the same;

Fig. 7 is a right side view of the same broken in part;

Fig. 8 is a cross-sectional view taken along line VIII—VIII in Fig. 7;

Fig. 9 is a perspective view of the bushing as seen from the front side;

Fig. 10 is a perspective view of the same as seen from the rear side;

Fig. 11 is an enlarged sectional view showing the optical connectors bent;

Fig. 12 is a schematic view showing different radii of curvature on a curve formed by the curved convex surface.

An optical connector 1 has a connector body 2, a waterproof boot 3, a bellows 4 and a tape 5. The optical connector 1 accommodates a pair of optical fibers 7 having a plug 6 attached to the tip thereof. The fibers 7 extend through the waterproof boot 3 and the bellows 4 with the plug 6 extending through a bushing 8 and a top cover 9.

The connector body 2 made of plastics has an opening 10 in its front part, where the tips of the plugs 6 protrude. A female optical connector (not shown) with photoelectric elements is to be received in the opening 10. At the midpoint of the connector body 2 there is formed a partition plate 11 perpendicular to the axis and having a hole 12 to receive the plug 6. At one side of the connector body 2 is provided a retaining plate 14 formed with a jaw 13 to prevent the possible removal of the male connector from its connected position. The connector body 2 is also provided with a projection 15 near its rear end for engagement between the top cover 9 and connector body 2.

The top cover 9 functions to couple the waterproof boot 3 with the connector body 2 as well as to keep the plug 6 in alignment. The top cover 9 comprises a tubular portion 16 disposed at its rear, a central ring portion 17, vertical grooves 18 and a front ring portion 19 at its front.

The top cover 9 is made in the form of a stepped tube whose diameter is narrower at its rear and wider at its front. There are provided at least two vertical grooves 18, the part except the grooves continuing to the front ring portion 19. A projection 20 serves to couple the top cover 9 with the waterproof boot 3.

The waterproof boot 3 is formed with a conical portion 21 narrowing toward its rear end so as to protect the optical fibers 7. The waterproof boot 3 is formed with an enlarged portion 22 to receive the rear end of the bushing 8. The waterproof boot 3 has a projection 23 which serves to receive the projection 20 of the top cover 9. The foremost end of the boot 3 is a tubular portion 24 for holding the connector body 2 in position.

Each plug 6 has a flange 25 which abuts against the inner face of the partition plate 11 in the connector body. A spring 26 is mounted between the flange 25 and the tubular portion 16 of the top cover 9 to urge the flange 25 against the partition plate 11. The plug 6 is provided with a light passing hole 27 on its front end.

The bushing 8 is provided in order to avoid excessive bending of the optical fibers.

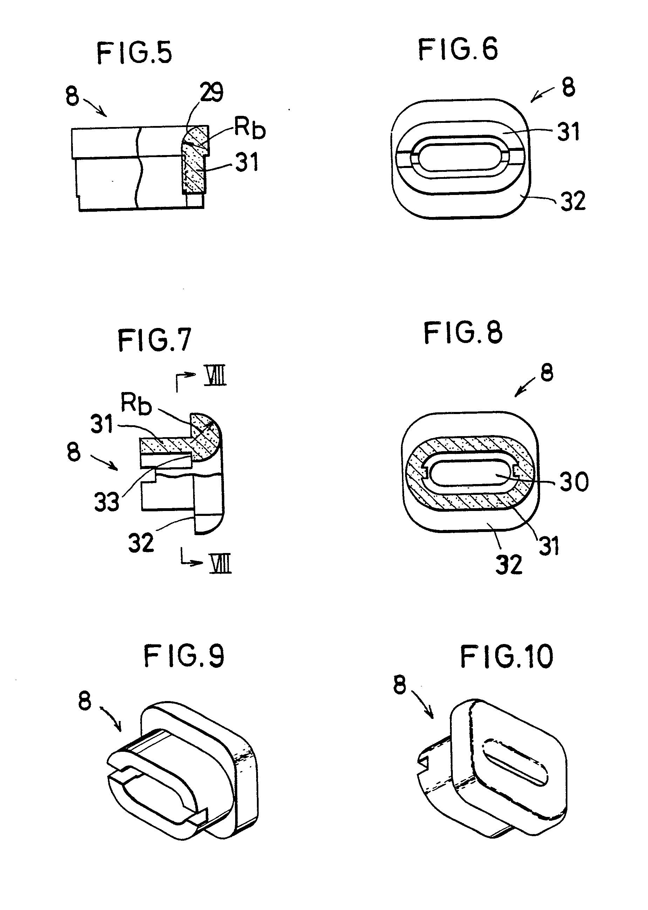

The bushing 8 is of a plate-like shape at its rear end with each corner rounded. (Fig. 9). Important is that a curved convex surface 29 is formed on its rear end face. The bushing 8 has a central hole 30 extending axially, the optical cables passing therethrough. The convex surfaces 29 above and below the hole 30 are in the form of a half circle (Fig. 7) with a radius Rb of 3 mm, while the curved convex surfaces 29 to the right and left of the hole 30 are in the form of a quadrant (Fig. 5) with the same radius. The bushing 8 has a tubular portion 31 of an oval cross-section to encase the tubular portion 16 of the top cover 9. The bushing 8 is formed with an outer shoulder 32, where the bushing 8 abuts against the projecting portion 22 of the boot 3. An inner shoulder 33 is fit on the end face of the tubular portion 16 of the top cover.

Next, the effect of the present invention will be described below.

In the optical connector according to the present invention, a bushing having the curved convex surface 29 on its rear end is provided. Therefore, the optical fibers passing through the bushing will not be bent to an excessive degree even under tension applied thereto from side.

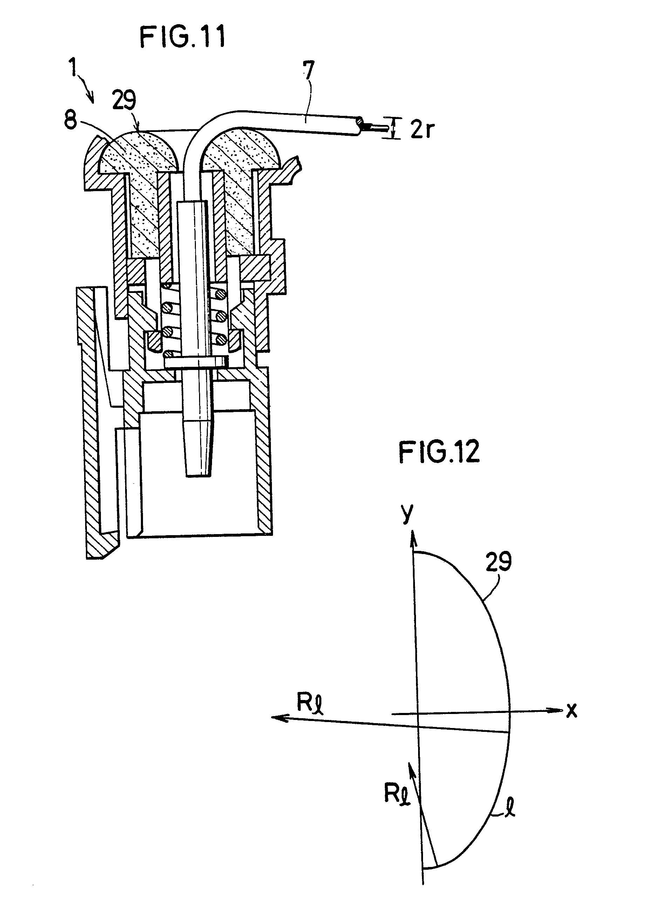

Fig. 11 shows the optical fibers subjected to bending. The value $R_{min}$, which is the minimum radius of curvature at the bending portion of the optical fibers, may be expressed as

$$R_{min} = Rb + \gamma \qquad (1)$$

wherein Rb is the radius of curvature of the curved convex surface of the bushing and $\gamma$ is the radius of the fibers. Therefore, the optical fibers will not bend with a smaller radius of curvature than the minimum one. This ensures that the breakage of the fibers due to repeated excessive bendings can be prevented.

In this embodiment, the radius of curvature Rb along the curved convex surface is constant. The central angle $\phi$ of the arc formed with said radius is 180° (semicircle) in the vertical direction while it is 90° (quadrant) in the horizontal direction. The difference in the central angle is due to the fact that the two optical fibers are more liable to be bent in the vertical direction since they extend side by side.

Also, the radius of curvature Rb may not necessarily be constant. Fig. 12 is a schematic view showing a cross-sectional configuration of the curved convex surface 29. By the following formula, the radius of curvature RI may be defined at each point P on a curve I having coordinates X and Y,

$$\frac{I}{RI} = \frac{\dfrac{d^2y}{dx^2}}{\left(I + \left(\dfrac{dy}{dx}\right)^2\right)^{3/2}} \qquad (2)$$

This makes it possible to determine the minimum radius of curvature $R_{min}$ on basis of the materials, diameter and other measurements of the optical fibers used. The radius of curvature RI at a given point is determined to meet the following requirements,

$$RI \geqq R_{min} \qquad (3)$$

**Claims**

1. An optical fiber connector (1) for connecting two optical fibers arranged side by side with an optical element or an optical fiber, comprising a plug (6) attached to the end of each of the fibers and a bushing (8) disposed to surround both fibers (7) egressing from the rear ends of the plugs (6), the end portion of the bushing facing away from said plugs being formed with a convexly curved surface (29) facing the fibers for protecting them against breaking, characterized in that said convex surface (29) of said bushing extends over an arc of substantially 180° in a longitudinal section at right angles to the common plane of said fibers (7), and extends over an arc of substantially 90° in a longitudinal section coincident with the common plane of the fibers (7).

2. An optical fiber connector as claimed in claim 1 characterized in that said bushing (8) is a separate element located inside a flexible waterproof boot (3) surrounding the fibers (7).

**Patentansprüche**

1. Optischer Verbindungsstecker (1) zum Verbinden von zwei Seite an Seite angeordneten optischen Fasern mit einem optischen Element oder einer optischen Faser, mit einem Stecker (6), der an einem Ende jeder der Fasern befestigt ist, und einer Hülse (8), die so angeordnet ist, daß sie beide Fasern (7) umschließt, welche aus dem hinteren Ende des Steckers (6) heraustreten, wobei das von den Steckern wegweisende Teil der Hülse mit einer zu den Fasern weisenden konvex gekrümmten Fläche (29) versehen ist, um diese gegen Bruch zu sichern, dadurch gekennzeichnet, daß die konvexe Fläche (29) der Hülse sich im Längsschnitt unter rechtem Winkel zur gemeinsamen Ebene der Fasern (7) über einen Bogen von etwa 180° erstreckt, und sich in einem Längsschnitt in der gemeinsamen Ebene der Fasern (7) über einen Bogen von etwa 90° erstreckt.

2. Stecker nach Anspruch 1, dadurch gekennzeichnet, daß die Hülse (8) ein getrenntes Element ist, welches innerhalb einer flexiblen wasserdichten Manschette (3) angeordnet ist, welche die Fasern (7) umgibt.

**Revendications**

1. Connecteur de fibres optiques (1) pour la raccordement de deux fibres optiques disposées côte à côte à un élément optique ou à une fibre optique, comprenant une fiche (6) attachée à l'extrémité de chacune des fibres et un manchon (8) disposé de façon à engainer les deux fibres (7) à la sortie des extrémités arrière des fiches (6), la partie terminale du manchon du côté opposé aux fiches étant façonnée avec une surface courbe convexe (29) vis-à-vis des fibres, afin de protéger celles-ci contre la rupture, caractérisé en ce que ladite surface convexe (29) du manchon s'étend sur un arc mesurant pratiquement 180° dans une vue en coupe longitudinale perpendiculaire au plan commun des fibres et elle s'étend sur un arc mesurant pratiquement 90° dans une vue en coupe longitudinale coïncidant avec le plan commun des fibres (7).

2. Connecteur de fibres optiques selon la revendication 1, caractérisé en ce que le manchon (8) est un élément séparé, disposé à l'intérieur d'une tétine flexible étanche à l'eau (3) qui entoure les fibres (7).

FIG.1

FIG.2

FIG.3

FIG.4

FIG.5

FIG.6

FIG.7

FIG.8

FIG.9

FIG.10

## FIG.11

## FIG.12